# EUROPÄISCHE PATENTSCHRIFT

(11) **EP 3 992 506 B1**
(45) Veröffentlichungstag und Bekanntmachung des Hinweises auf die Patenterteilung: **17.07.2024**
(21) Anmeldenummer: 20204553.0
(22) Anmeldetag: 29.10.2020
(51) Int. Cl.: F16L 5/02, F16L 59/02, F16L 59/12, F16J 15/06, F16J 15/10

(54) **VORRICHTUNG ZUR WÄRMEISOLIERUNG UND ZUR WÄRMEABFÜHRUNG UND KÜHLUNG**
DEVICE FOR THERMAL INSULATION AND HEAT DISSIPATION AND COOLING
DISPOSITIF D'ISOLATION THERMIQUE ET DE DISSIPATION DE CHALEUR ET DE REFROIDISSEMENT

(43) Veröffentlichungstag der Anmeldung: 04.05.2022
(73) Patentinhaber: tmax Holding GmbH, 68169 Mannheim (DE)
(72) Erfinder: Baum, Armin, 64668 Rimbach (DE)
(74) Vertreter: Wesch, Arno

(56) Entgegenhaltungen:
- EP-A1- 2 592 309
- DE-A1- 2 229 521
- GB-A- 333 345
- US-A- 1 601 381

## Beschreibung

Die Erfindung betrifft eine Vorrichtung nach dem Oberbegriff des Patentanspruchs 1.

Aus der EP 2 592 309 A1 ist bereits eine als Stapel ausgebildete Stopfbuchspackung bekannt, die feuerresistentes Garn aufweist. Die GB 333 345 A zeigt einen Packungsring nach Art eines Faltenbalgs umfassend Asbest. Aus der DE 2 229 521 A ist eine als Wärme- und Strahlungsschutz geeignete Decke bekannt. Aus der US 1 601 381 A ist ein spiralförmig gewickelter Faltenbalg bekannt, der ein bewegliches Maschinenelement umfängt.

Es ist bereits bekannt, Rohrleitungen mit Manschetten oder ähnlichem zu umgeben, um deren Wärme zu isolieren und Personen vor dem Kontakt mit heißen Rohren oder Maschinenteilen zu schützen. Vor diesem Hintergrund sei lediglich beispielhaft auf die EP 3 239 586 B1 verwiesen.

Es ist auch bekannt, Kühlkörper mit Lamellen an heiße Gegenstände zu legen, um eine Wärmeabführung zu bewirken.

Allerdings sind sowohl Elemente zur Wärmeisolierung als auch Elemente zur Wärmeabführung und Kühlung häufig nur unter erheblichem Aufwand fertigbar, weil diese in aufwendiger Weise konfektioniert und an die jeweilige Anwendung angepasst werden müssen. Sehr feine und filigrane Strukturen können oft nur unter ganz erheblichem Aufwand isoliert und/ oder gekühlt werden.

Der Erfindung liegt vor diesem Hintergrund die Aufgabe zugrunde, ein Element zur Wärmeisolierung und/ oder zur Wärmeabführung und Kühlung eines Körpers anzugeben, welches leicht gefertigt werden kann.

Die vorliegende Erfindung löst die genannte Aufgabe durch die Merkmale des Patentanspruchs 1.

Erfindungsgemäß ist zunächst erkannt worden, dass ein flexibler, bevorzugt relativ leicht deformierbarer und vibrationsstabiler Stapel aus mehreren aneinander liegenden, gleich dicken Lagen so aufgebaut werden kann, dass dessen Funktionen Wärmeisolierung und/ oder Wärmeabführung besonders effektiv und baulich einfach realisiert werden können. Je nach Dicke einer Lage kann die Höhe oder Längserstreckung des Elements leicht eingestellt werden. Hierdurch ist es besonders einfach, das Wärmeisolierungsvermögen und/ oder das Wärmeabführungsvermögen eines dreidimensionalen, länglichen Elements einzustellen, wogegen Formteile des Stands der Technik in aufwendiger Weise geformt und gepresst werden müssen. Die Stärke bzw. der Grad der Wärmeisolierung und/ oder der Wärmeabführung kann bzw. können über die Höhe oder Längserstreckung des Elements eingestellt werden. Je nach Stapelhöhe oder auch Dicke der Lagen können die Stärken der Wärmeisolierung und der Wärmeabführung je nach Anwendungsfall genau eingestellt werden. Erfindungsgemäß bildet eine Vielzahl von Lagen den Stapel. Ein solches Element kann unter Verwendung von nur wenig Zukaufteilen, im Wesentlichen ohne mechanische Bearbeitung, ohne Presswerkzeuge, nahezu ohne Faserverlust und mit sauberen Kanten gefertigt werden. Ein solches als sogenannte Softisolierung ausgestaltetes dreidimensionales Element ist hochtemperaturbeständig, bewirkt eine Wärmeisolierung und/ oder eine Wärmeleitung.

Vor diesem Hintergrund könnte der erste Stapel aus ersten Lagen der Wärmeisolierung dienen, und der mit dem ersten Stapel mittelbar oder unmittelbar verbundene zweite Stapel aus zweiten Lagender Wärmeabführung und Kühlung dienen, wobei der zweite Stapel den ersten Stapel umgeben könnte und/ oder wobei der erste Stapel seitlich neben dem zweiten Stapel angeordnet sein könnte. Bei dieser Ausgestaltung können in einem Bauteil oder einem dreidimensionalen Körper die Funktionen Wärmeisolierung und Wärmeabführung zugleich und in Kombination realisiert werden. Bevorzugt ist der erste Stapel aus Lagen aus einem hochtemperaturbeständigen fasrigen Gewebe gefertigt und ist der zweite Stapel aus metallischen Lagen aus Aluminium oder Kupfer oder Edelstahl gefertigt. Vor diesem Hintergrund können unterschiedliche Volumenkörper bzw. Stapel in Reihe geschaltet werden, und es können somit wärmeisolierende mit nachfolgenden wärmeleitenden Eigenschaften verwirklicht werden.

Eine erste Lage eines der Stapel könnte einen Schlitz aufweisen, der zu einem Schlitz einer benachbarten Lage versetzt oder deckungsgleich angeordnet ist. Durch den Versatz ist es möglich, dass ein Schlitz einer ersten Lage von einer benachbarten Lage verdeckt ist, wenn die Lagen an einander liegen. Heiße Gase, die durch die Schlitze wandern, müssen so eine Labyrinthstruktur aus zueinander versetzten Schlitzen durchwandern und können effektiv zurückgehalten werden. Bei deckungsgleicher Anordnung lässt sich ein Stapel leicht aufspreizen, um beispielsweise auf ein Rohr aufgestülpt zu werden.

Vor diesem Hintergrund könnte eine Lage eine Ringkontur aufweisen und durch Überlappung mit mindestens einer weiteren aufgrund der versetzt angeordneten Schlitze oder Schnitte ein dichtes Element bilden. Es können kreisrunde oder auch andere geometrische Konturen überlappend und somit geschlossen aufgebaut werden. Ein Einbauen oder auch Einfädeln des Elements ist aufgrund der Schlitze, die ein Aufspreizen des Elements ermöglichen, in vielen Fällen möglich, eine hohe Dichtheit ist trotz der Schlitze gegeben. Bevorzugt ist ein Stapel so weich ausgebildet, dass er leicht deformierbar, aufspreizbar und beispielsweise um ein Rohr herum legbar ist. Jede Lage weist einen Durchgang oder eine Aussparung auf, der bzw. die zumindest teilweise oder vollständig mit einem Durchgang oder einer Aussparung einer benachbarten Lage des gleichen Stapels fluchtet oder kongruent zu diesem bzw. zu dieser ausgebildet ist. So kann beispielsweise ein Rohr oder eine Leitung durch das Element hindurchgeführt werden. Durch zusätzlich vorgesehene Schlitze kann das Element auch unter Aufspreizung seitlich auf ein Rohr aufgesteckt oder aufgestülpt werden.

Mindestens eine Lage eines der Stapel könnte eine Ausnehmung aufweisen, die bei einer anderen Lage des gleichen Stapels nicht vorgesehen ist. Hierdurch kann eine Art Sackloch in einem Element erzeugt werden, in welches ein Rohr eingesteckt werden kann, wobei das Rohrende an einer Lage überwiegend dicht anliegt.

Mindestens eine Lage eines der Stapel könnte eine andere Dimension, einen anderen Umfang und/ oder eine andere Umfangskontur als eine andere Lage des gleichen Stapels aufweisen. Hierdurch können einzelne Lagen als Lamellen oder Dichtlippen aus einem Stapel herausragen, während andere Lagen bevorzugt in Radialrichtung zurückgesetzt sind.

Alle Lagen eines der Stapel könnten aus einem Verbund gefertigt sein, wobei der Verbund ein Gewebe, Gestrick oder Gewirke mit einer einseitigen oder beidseitigen Beschichtung umfasst. Hierdurch kann durch nur einen Stapel sowohl eine Wärmeisolierung als auch eine Wärmeabführung und Kühlung realisiert werden. Bei einer beidseitigen Beschichtung ist das Gewebe sandwichartig zwischen den Beschichtungen aufgenommen. Abhängig vom Gewebematerial und dessen Beschichtung kann die Härte oder Weichheit des Stapels je nach Anwendungsfall ausgelegt werden. Sofern der Schwerpunkt auf der Wärmeabführung oder Kühlung liegt kann ein beidseitig beschichtetes Gewebe verwendet werden. In diesem Fall kann eine höhere Beschichtungsdicke verwendet werden.

Sofern die Wärmeisolierung nahezu keine Rolle spielt, kann auch ein reines Aluminiumgewebe, ein Aluminiumgestrick oder gar eine Aluminiumfolie als Lage verwendet werden. Sofern der Schwerpunkt auf der Wärmeisolierung liegt, könnte auf eine wärmeleitende Beschichtung verzichtet und handelsübliche, im Wesentlichen schnittfeste Gewebe verwendet werden.

Vor diesem Hintergrund könnte das Gewebe, Gestrick oder Gewirke ein hochtemperaturbeständiges Isoliergewebe sein, welches mit einer wärmeleitenden Beschichtung oder einem Metall als wärmeleitender Beschichtung versehen ist. Bevorzugt wird als Metall Aluminium oder Kupfer oder Edelstahl verwendet. Besonders bevorzugt ist das Metall mit einer Riefenstruktur oder rauen Oberfläche versehen. Gewebe, Gestricke oder Gewirke können durch spezielle wärmeleitende Beschichtungen, beispielsweise aus Aluminium oder Kupfer oder Edelstahl, die eigentlich unterschiedlichen Funktionen Wärmeisolieren und Wärmeableiten durch ein Bauteil ausüben.

Alle Lagen eines der Stapel könnten miteinander fest verbunden sein, oder alle Lagen eines der Stapel könnten ohne Verwendung eines Klebstoffs miteinander verliersicher verbunden sein. Hierdurch sind die Lagen verliersicher aneinander angebunden.

Die Lagen eines der Stapel könnten aufeinander folgende Dichtlippen ausbilden. Hierdurch kann ein Element in eine Durchbrechung einer Wand eingesteckt werden, wobei die Dichtlippen eine Labyrinthstruktur mit der Innenwandung des Durchbruchs bilden, durch die heiße Gase nur sehr schwer migrieren können. Die Dichtlippen können auch nach innen gewandt sein und gegen einen Körper abdichten, der durch den Stapel hindurchgesteckt ist, beispielsweise gegen ein Rohr.

Erfindungsgemäß umfasst die Vorrichtung zum Anordnen an einem Maschinenteil oder in einem Durchbruch ein Gehäuse, welches ein Element der hier beschriebenen Art in oder an sich aufnimmt oder zumindest teilweise umgibt,
wobei das Gehäuse Mittel aufweist, mit denen es an einer Rohrleitung, an einem Maschinenteil und/ oder in einem Durchbruch festlegbar ist. Bevorzugt ist das Gehäuse als Blechteil oder Blechabdeckung ausgestaltet. Ein solches Gehäuse kann mit einem Flansch an eine Wand angelegt werden oder mit einer Rohrschelle an einem Rohr befestigt werden.

Das Gehäuse weist eine erste zumindest teilweise abgeschlossene Kammer auf, in der ein erster Stapel zur Wärmeisolierung angeordnet ist, wobei außerhalb der Kammer ein zweiter Stapel zur Wärmeabführung vorgesehen ist. Hierdurch können mit nur einer Vorrichtung sowohl eine Wärmeisolierung als auch eine Wärmeabführung erzielt werden. Es ist auch denkbar, dass das Gehäuse einen Flansch aufweist, an dem beidseitig je ein Stapel anliegt, der nicht von einem Gehäuse umgeben ist.

Das hier beschriebene Element eignet sich insbesondere für kleine, filigrane Durchführungen für Leitungen und Sensoren an Heißbereichen mit Kapselungen. In diesem Anwendungsbereich können gegenüber den bisherigen Elementen, die häufig als Isoliermatten ausgestaltet sind, kleine und genaue Konturen mit definierten isolierenden Schichtdicken verwirklicht werden. Kleine Durchtritte können mit definierten Schichtdicken verschlossen werden. Das Element könnte in der Sensorik zur Ausstattung von temperaturkritischen Sensoren verwendet werden. Das hier beschriebene Element, welches Wärmeisolierung und Wärmeableitung bewirken kann, eignet sich besonders gut für SOLAS-Anwendungen mit einer Sensorik. Bevorzugt wird das hier beschriebene Element daher in Anordnungen verwendet, die den Vorschriften nach SOLAS genügen. SOLAS steht für International Convention for the Safety of Life at Sea.

Bevorzugt weist die Querschnittsfläche eines der Stapel oder des Elements, die
orthogonal zur Längsrichtung des Stapels oder Elements ist, eine Länge, Breite oder einen Durchmesser auf, die jeweils nicht größer als 200 mm ist.

Die hier beschriebenen Elemente finden Verwendung, um beispielsweise Rohrleitungen, Motoren, Maschinen oder Motor- bzw. Maschinenteile so zu verkleiden oder abzudichten oder abzuschotten, dass eine Gefährdung von Personen durch hohe Temperaturen, insbesondere in Motorräumen und Maschinenräumen, möglichst vermieden wird. Vor diesem Hintergrund sind Standardisolierverkleidungen nach SOLAS (Internationales Übereinkommen von 1974 zum Schutz des menschlichen Lebens auf See) bekannt. Ein hier beschriebenes Element genügt den Anforderungen nach SOLAS.

Soweit in dieser Beschreibung von Gewebe die Rede ist, sind auch Gestricke oder Gewirke mit umfasst, die Fasern umfassen, die hochtemperaturbeständig sind, also Temperaturen von 100 °C bis 1200 °C zerstörungsfrei Stand halten. Beispiele für solche Fasern sind Glasfasern, Aramidfasern oder Carbonfasern. Soweit in dieser Beschreibung von einer Vielzahl von Lagen die Rede ist, sind mehr als drei oder mehr als fünf, bevorzugt mehr als zehn Lagen gemeint. Sobald eine Lage verschlissen ist, kann die nächste Lage des Stapels an einem Widerlager funktionsgerecht zur Anlage kommen. Hierdurch ist es möglich, sogar ein elektronisches Signal zu erzeugen, das dann auftritt, wenn eine Lage zerschlissen ist und/ oder keine weitere unverschlissene Lage des Stapels mehr zur Verfügung steht. Das elektronische Signal kann aufgrund der elektrischen Leitfähigkeit der Lage oder deren Beschichtung erzeugt werden. Sobald keine Lage mehr vorhanden ist, kann ein elektrischer Kontakt unterbrochen werden.

Beim hier beschriebenen Element könnte mindestens einer der Stapel aus einer Vielzahl von gefalteten, an einander liegenden Lagen gefertigt sein, wobei je zwei Lagen an einer Scharnier- und Knick- oder Faltstelle zusammenhängend miteinander verbunden sind. Hierdurch kann ein dreidimensionaler Körper durch Zuschnitt eines zweidimensionalen, flächigen Körpers und anschließender Falttechnik gefertigt werden. Durch das Zuschneiden und Falten wird ein Element realisierbar, welches als Wärmeisolierkörper und/ oder als Kühlkörper einsetzbar ist. Besonders bevorzugt ist das Element ein Wärmeisolierkörper und ein Kühlkörper in Kombination. Eine Dichtwirkung im Hochtemperaturbereich ist durch eine Art Faltenbalg-Prinzip realisierbar. Dichtlippen, die durch die Faltung entstehen, dichten nacheinander an einer inneren und/ oder äußeren Kontur ab.

Als zu faltende Ausgangsmaterialien können handelsübliche, hochtemperaturbeständige Isoliergewebe verwendet werden, die in dünner Qualität auf gängigen Cuttern oder mit Lasern geschnitten werden können. Beim Schneiden handelt es sich um einen Bearbeitungsprozess auf zweidimensionaler Ebene, bei dem Konturen ausgeschnitten oder ausgestanzt werden können, wobei saubere Kanten entstehen. Mittels der Falttechnik wird aus dem im Wesentlichen zweidimensionalen zugeschnittenen Gewebe ein dreidimensionaler Volumenkörper, nämlich der Stapel, der prinzipiell jegliche Kontur und Geometrie aufweisen kann. Eine aufwendige mechanische Bearbeitung und Werkzeuge werden für den Faltvorgang nicht benötigt. Das zuvor beschriebene Fertigungsverfahren ist kostgünstig, da keine bauteilspezifischen Werkzeuge benötigt werden.

Durch das beschriebene Fertigungsverfahren können Isolierformteile ersetzt werden. Je nach Abwicklung oder auch Gewebestärke können aufwendig hergestellte Isolierformteile durch Falttechnik-Bauteile ersetzt werden.

Es können Isolierformteile mit Verschleißschutz realisiert werden. Ein Gewebe mit einer Metallverstärkung kann ein Isolierformteil mit angenähtem Stahlgewebe ersetzen. Durch den mehrlagigen Aufbau und eine entsprechende Vorspannung des Elements erhält man einen entsprechenden Verschleißvorrat. Ist nämlich eine Lage eines der Stapel durch Verschleiß aufgebraucht, wird diese durch die nächstfolgende Faltlage ersetzt.

In der Zeichnung zeigen
- Fig. 1: eine perspektivische Ansicht eines Elements, welches einen Stapel aus gleich dicken Lagen aufweist, wobei einzelne Lagen Schlitze aufweisen, die zueinander versetzt angeordnet sind,
- Fig. 1a: eine weitere perspektivische Ansicht eines Elements, welches einen Stapel aus gleich dicken Lagen aufweist, wobei einzelne Lagen Schlitze aufweisen, die nach Faltung zueinander versetzt angeordnet sind,
- Fig. 1b: eine weitere perspektivische Ansicht eines Elements, welches einen Stapel aus gleich dicken Lagen aufweist, wobei einzelne Lagen Schlitze aufweisen, die nach Faltung nicht zueinander versetzt, sondern deckungsgleich angeordnet sind,
- Fig. 2: eine perspektivische Ansicht eines weiteren Elements, bei dem ein Stapel in einem Gehäuse gekammert ist,
- Fig. 2a: eine perspektivische Ansicht eines weiteren Elements, bei dem ein Stapel an einem Flansch anliegt,
- Fig. 3: eine perspektivische Ansicht eines weiteren Elements, welches zwei Stapel aufweist, wobei ein erster Stapel in einem Gehäuse gekammert ist und ein zweiter Stapel außen am Gehäuse angeordnet ist,
- Fig. 3a: eine perspektivische Ansicht eines weiteren Elements, welches zwei Stapel aufweist, wobei ein erster Stapel auf einer Seite eines Flanschs angeordnet ist und ein zweiter Stapel auf der anderen Seite des Flanschs angeordnet ist,
- Fig. 4: eine flächige Struktur, aus der einzelne Lagen und Faltstellen ausgeschnitten sind,
- Fig. 5: eine Seitenansicht der zu einem Stapel gefalteten Struktur gemäß Fig. 4, und
- Fig. 6: eine weitere flächige Struktur, aus der einzelne Lagen und Faltstellen ausgeschnitten sind, wobei die ausgeschnittenen Schlitze versetzt zueinander angeordnet sind.

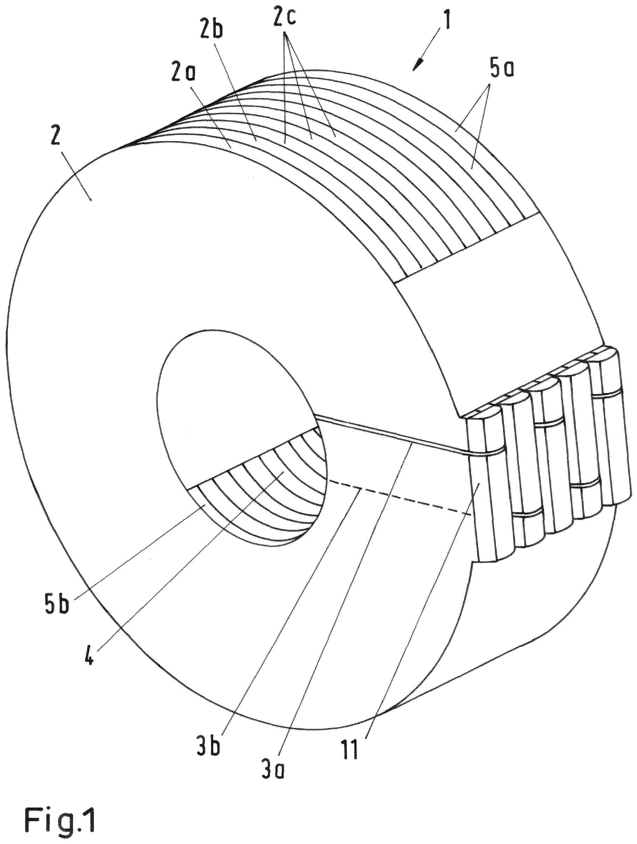

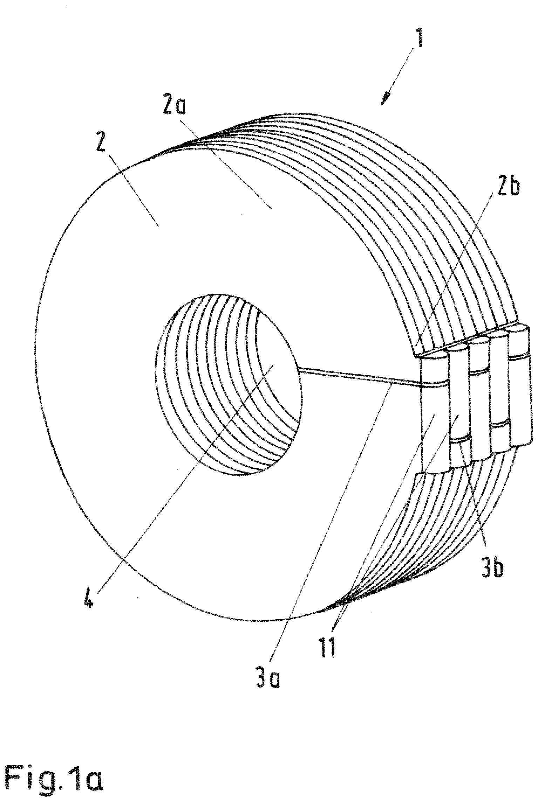

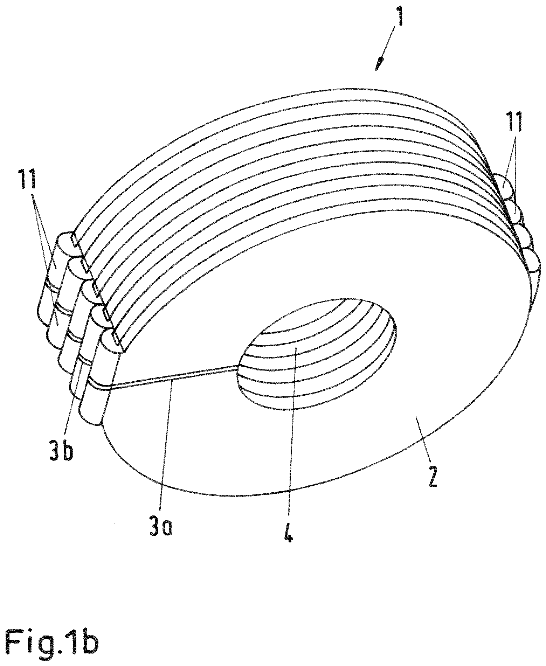

Fig. 1 und 1a zeigen jeweils in perspektivischer Ansicht ein Element 1 zur Wärmeisolierung im Hochtemperaturbereich von 100 °C bis 1200 °C und zur Wärmeabführung und Kühlung im Hochtemperaturbereich von 100 °C bis 1200 °C, welches einen flexiblen, vibrationsstabilen und formstabilen Stapel 2 aus einer Vielzahl mehrerer aneinander liegender, gleich dicker Lagen 2a, 2b aufweist, wobei jede Lage 2a, 2b des Stapels 2 aus dem gleichen Material oder den gleichen Materialien gefertigt ist wie die jeweils anderen Lagen 2c des Stapels 2 und wobei jede Lage 2a, 2b, 2c ein Metall und/ oder ein hochtemperaturbeständiges Gewebe, Gestrick oder Gewirke aufweist. Konkret sind in Fig. 1 zehn Lagen 2a, 2b, 2c vorgesehen, wobei jedoch der Begriff Vielzahl schon eine Zahl von mehr als drei oder mehr als fünf Lagen abdeckt.

Eine erste Lage 2a des Stapels 2 weist einen Schlitz 3a auf, der zu einem Schlitz 3b der benachbarten Lage 2b versetzt angeordnet ist. Der zweite Schlitz 3b ist durch die erste Lage 2a verdeckt, so dass eine Labyrinthdichtung entsteht.

Jede Lage 2a, 2b, 2c weist einen Durchgang 4 auf, der vollständig mit einem Durchgang 4 einer benachbarten Lage 2a, 2b, 2c des gleichen Stapels 2 fluchtet und kongruent zu diesem ausgebildet ist. Konkret ist ein kreisrunder Durchgang 4 dargestellt, durch den ein nicht gezeigtes heißes Rohr hindurchführbar ist.

Alle Lagen 2a, 2b, 2c des Stapels 2 sind aus einem Verbund gefertigt, welcher ein Gewebe, Gewirke oder Gestrick mit einer einseitigen oder beidseitigen Beschichtung umfasst. Konkret ist das Gewebe ein hochtemperaturbeständiges Isoliergewebe, welches mit einer wärmeleitenden Beschichtung oder einem Metall als wärmeleitender Beschichtung versehen ist. Hierdurch ist das Element 1 sowohl als Wärmeisolierkörper als auch als Kühlkörper ausgestaltet. Die Funktionen Wärmeisolierung und Wärmeableitung und Kühlung können beide von nur einem Bauteil ausgeführt werden.

Alle Lagen 2a, 2b, 2c des Stapels 2 sind miteinander fest verbunden. Alle Lagen 2a, 2b, 2c des Stapels 2 sind ohne Verwendung eines Klebstoffs miteinander verliersicher verbunden.

Die Lagen 2a, 2b, 2c des Stapels 2 bilden aufeinander folgende Dichtlippen 5a, 5b aus. Konkret sind aufeinander folgende äußere Dichtlippen 5a am Außenumfang des Stapels 2 ausgebildet. Des Weiteren sind aufeinander folgende innere Dichtlippen 5b am Innenumfang des Stapels 2 ausgebildet, welcher den Durchgang 4 begrenzt. So können die äußeren Dichtlippen 5a an einer Innenwandung eines Durchbruchs in einer heißen Wand anliegen. Die inneren Dichtlippen 5b können an einem heißen Rohr anliegen, welches durch den Durchgang 4 hindurchläuft.

Fig. 1b zeigt eine weitere perspektivische Ansicht eines Elements 1, welches einen Stapel 2 aus gleich dicken Lagen 2a, 2b, 2c aufweist, wobei einzelne Lagen 2a, 2b Schlitze 3a, 3b aufweisen, die nicht zueinander versetzt, sondern deckungsgleich angeordnet sind.

Fig. 1, 1a und 1b zeigen, dass mindestens ein Stapel 2 aus einer Vielzahl von gefalteten, an einander liegenden Lagen 2a, 2b, 2c gefertigt ist. Je zwei Lagen 2a, 2b sind an einer Scharnierstelle, die als Knick- oder Faltstelle 11 ausgebildet ist, zusammenhängend miteinander verbunden. Es sind in Fig. 1 konkret zehn Lagen 2a, 2b, 2c vorgesehen.

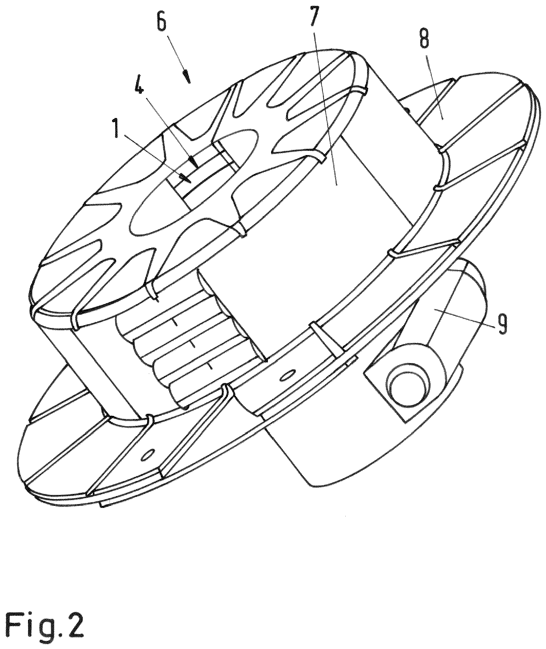

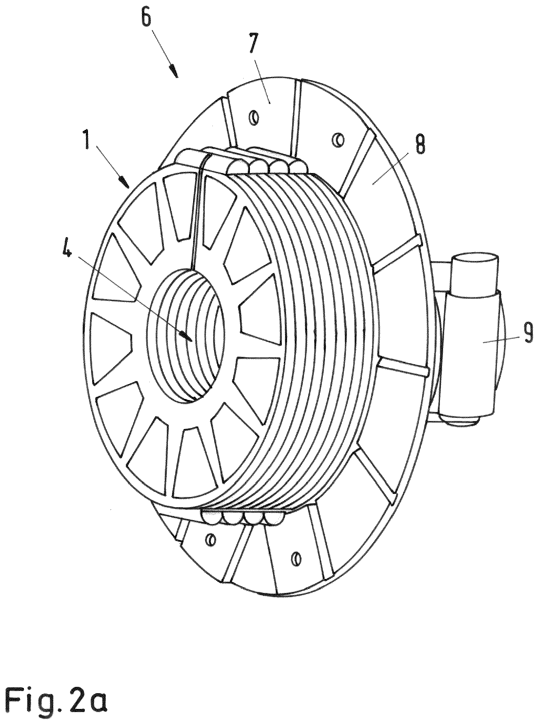

Fig. 2 zeigt eine Vorrichtung 6 zum Anordnen an einem Maschinenteil und/ oder in einem Durchbruch einer Wand, umfassend ein Gehäuse 7, welches ein Element 1 in sich aufnimmt und zumindest teilweise umgibt, wobei das Gehäuse 7 Mittel aufweist, mit denen es an einer Rohrleitung, an einem Maschinenteil und/ oder in einem Durchbruch festlegbar ist. Konkret ist ein Mittel als Flansch 8 ausgebildet, der an eine Wand anlegbar ist, wobei der Flansch 8 einen nicht gezeigten Durchbruch in der Wand umgibt bzw. umgeben würde. Durch Anlage des Flanschs 8 an die Wand würde der Durchbruch abgedichtet. Ein weiteres Mittel ist als Rohrschelle 9 ausgebildet, welche ein nicht gezeigtes Rohr fest mit der Vorrichtung 6 verbinden würde, wenn sich das Rohr durch den Durchgang 4 des Elements 1 und den Durchbruch in der Wand erstreckt.

Fig. 2a zeigt eine weitere Vorrichtung 6 zum Anordnen an einem Maschinenteil und/ oder in einem Durchbruch einer Wand, umfassend ein Gehäuse 7, wobei das Gehäuse 7 Mittel aufweist, mit denen es an einer Rohrleitung, an einem Maschinenteil und/ oder in einem Durchbruch festlegbar ist. Konkret ist ein Mittel als Flansch 8 ausgebildet, der an eine Wand anlegbar ist, wobei der Flansch 8 einen nicht gezeigten Durchbruch in der Wand umgibt bzw. umgeben würde. Durch Anlage des Flanschs 8 an die Wand würde der Durchbruch abgedichtet. Ein weiteres Mittel ist als Rohrschelle 9 ausgebildet, welche ein nicht gezeigtes Rohr fest mit der Vorrichtung 6 verbinden würde, wenn sich das Rohr durch den Durchgang 4 des Elements 1 und den Durchbruch in der Wand erstreckt. Das Element 1 liegt hier am Flansch 8 auf einer Seite an und ist nicht an seinem äußeren Umfang vom Gehäuse 7 umgeben.

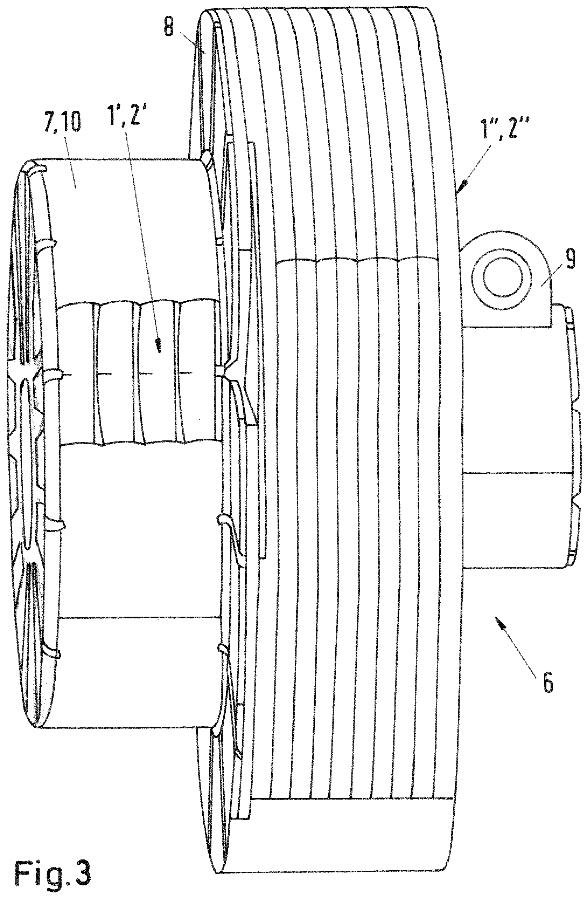

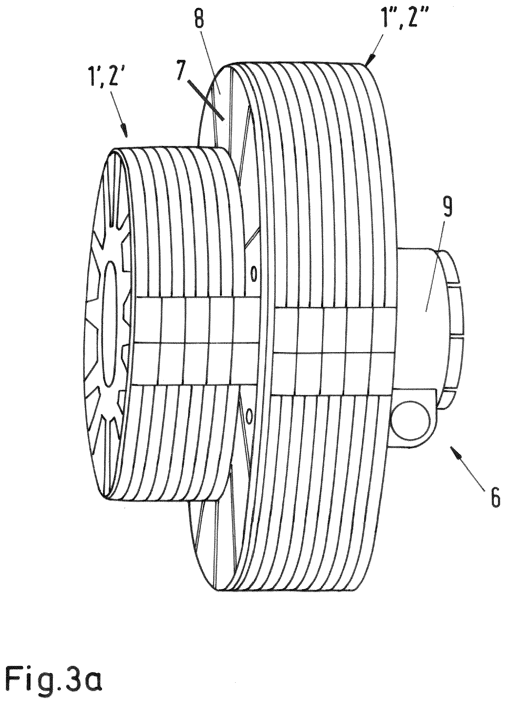

Fig. 3 zeigt eine Vorrichtung 6, bei der das Gehäuse 7 eine erste zumindest teilweise abgeschlossene Kammer 10 aufweist, in der der ein erster Stapel 2' zur Wärmeisolierung angeordnet ist, wobei außerhalb der Kammer 10 ein zweiter Stapel 2" zur Wärmeabführung vorgesehen ist. Diese Vorrichtung 6 trägt insoweit zwei Elemente 1', 1".

Es ist ein erster Stapel 2' aus ersten Lagen vorgesehen, welcher der Wärmeisolierung dient. Der mit dem ersten Stapel 2` mittelbar verbundene zweite Stapel 2" ist aus zweiten Lagen gefertigt und dient der Wärmeabführung und Kühlung. Der zweite Stapel 2" umgibt den ersten Stapel 2`. Der erste Stapel 2` ist dabei seitlich neben dem zweiten Stapel 2" angeordnet. Im konkreten Ausführungsbeispiel sind die zwei Stapel 2', 2" koaxial angeordnet, so dass deren Durchgänge ebenfalls koaxial angeordnet sind.

Fig. 3a zeigt eine Vorrichtung 6, bei der das Gehäuse 7 einen Flansch 8 aufweist, an dem auf einer Seite ein erster Stapel 2' zur Wärmeisolierung angeordnet ist, wobei auf der anderen Seite des Flanschs 8 ein zweiter Stapel 2" zur Wärmeabführung vorgesehen ist. Diese Vorrichtung 6 trägt insoweit ebenfalls zwei Elemente 1', 1".

Es ist ein erster Stapel 2' aus ersten Lagen vorgesehen, welcher der Wärmeisolierung dient. Der mit dem ersten Stapel 2` mittelbar verbundene zweite Stapel 2" ist aus zweiten Lagen gefertigt und dient der Wärmeabführung und Kühlung. Der zweite Stapel 2" umgibt den ersten Stapel 2`. Der erste Stapel 2` ist dabei seitlich neben dem zweiten Stapel 2" angeordnet. Im konkreten Ausführungsbeispiel sind die zwei Stapel 2', 2" koaxial angeordnet, so dass deren Durchgänge ebenfalls koaxial angeordnet sind.

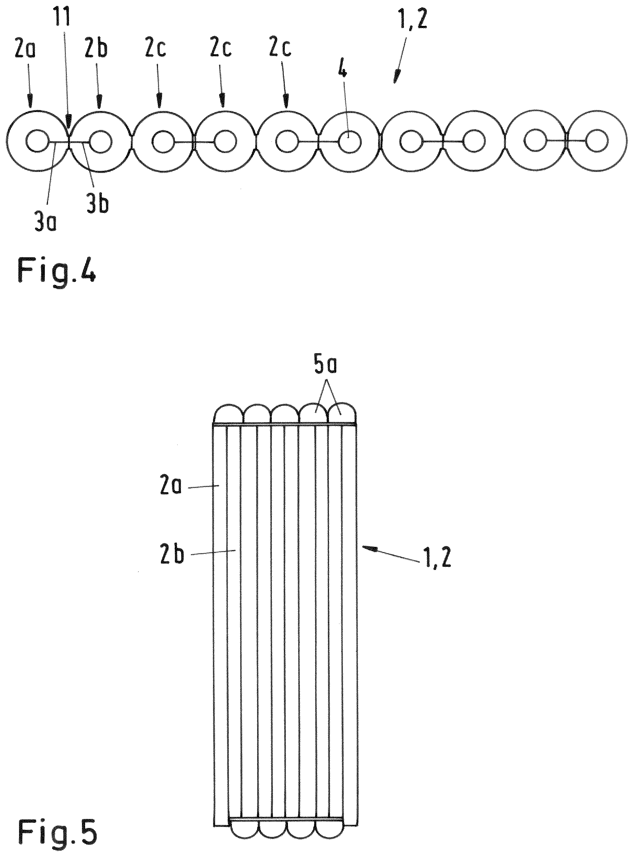

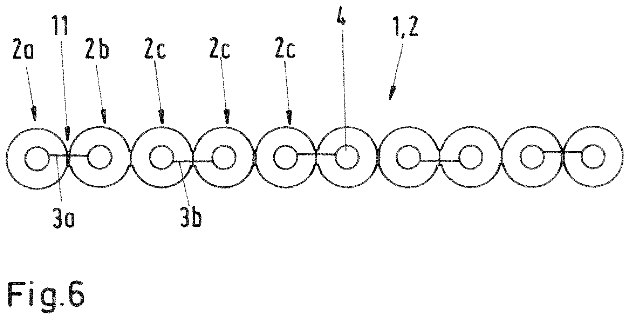

Die in den Figuren gezeigten Lagen 2a, 2b, 2c sind aus einem flächigen, im Wesentlichen zweidimensionalen, Körper, beispielsweise einem beschichteten Gewebe, Gewirk oder Gestrick, vorzugsweise durch Laserstrahlung ausgeschnitten und bilden vor ihrer Faltung eine im Wesentlichen zweidimensionale zusammenhängende Struktur aus, wie sie in Fig. 4 und 6 dargestellt ist.

Fig 5 zeigt eine Seitenansicht der Struktur gemäß Fig. 4 nach deren Faltung, die bewirkt, dass alle Lagen 2a, 2b, 2c neben- und an einander liegen und das Element 1 als dreidimensionalen Körper mit wesentlicher Erstreckung in einer Längsrichtung ausbilden.

Fig. 4 und 6 verdeutlichen ein Verfahren zur Herstellung des Elements 1 zur Wärmeisolierung und/ oder Wärmeableitung oder Kühlung gemäß Fig. 4 oder Fig. 6, welches die folgenden Schritte umfasst: Zuschneiden oder Ausstanzen des flächigen Körpers gemäß Fig. 4 oder Fig. 6, wobei Scharnier- und Knick-oder Faltstellen 11 zwischen den Lagen 2a, 2b, 2c erzeugt werden, und Falten des flächigen Körpers an den Scharnier- und Knick- oder Faltstellen 11, um die einzelnen Lagen 2a, 2b, 2c aneinander zu legen und diese parallel zueinander anzuordnen, um den dreidimensionalen Stapel 2 zu erzeugen.

Schlitze 3a, 3b können in unmittelbar benachbarten oder weiteren bzw. weiter entfernteren Lagen 2a, 2b, 2c versetzt oder nicht versetzt in die Lagen 2a, 2b, 2c eingeschnitten werden. Fig. 4 zeigt Schlitze 3a, 3b die an benachbarten Lagen 2a, 2b nicht versetzt angeordnet sind. Fig. 6 zeigt Schlitze 3a, 3b die an benachbarten Lagen 2b, 2c versetzt zueinander angeordnet sind.

### Bezugszeichenliste

- 1, 1',1": Element
- 2: Stapel
- 2`: erster Stapel
- 2": zweiter Stapel
- 2a: erste Lage
- 2b: zweite Lage
- 2c: weitere Lage
- 3a: Schlitz von 2a
- 3b: Schlitz von 2b oder 2c
- 4: Durchgang in 1
- 5a: äußere Dichtlippe von 1
- 5b: innere Dichtlippe von 1
- 6: Vorrichtung
- 7: Gehäuse von 1
- 8: Flansch von 6
- 9: Rohrschelle von 6
- 10: Kammer von 6
- 11: Scharnier- und Knick- oder Faltstelle

## Patentansprüche

1. Vorrichtung (6) zum Anordnen an einem Maschinenteil oder in einem Durchbruch einer Wand, umfassend ein Element (1, 1', 1") zur Wärmeisolierung im Hochtemperaturbereich von 100 °C bis 1200 °C und/ oder zur Wärmeabführung und Kühlung im Hochtemperaturbereich von 100 °C bis 1200 °C, wobei das Element (1, 1', 1") einen ersten Stapel (2') und einen zweiten Stapel (2") aufweist, wobei jeder Stapel (2, 2', 2") flexibel und aus einer Vielzahl mehrerer aneinander liegender, gleich dicker Lagen (2a, 2b, 2c) ausgebildet ist, wobei jede Lage (2a, 2b, 2c) des Stapels (2, 2', 2") aus dem gleichen Material oder den gleichen Materialien gefertigt ist wie die jeweils anderen Lagen (2a, 2b, 2c) des Stapels (2, 2', 2"), wobei jede Lage (2a, 2b, 2c) ein Metall und/ oder ein hochtemperaturbeständiges Gewebe, Gestrick oder Gewirke aufweist, wobei jede Lage (2a, 2b, 2c) einen Durchgang (4) oder eine Aussparung aufweist, der bzw. die zumindest teilweise oder vollständig mit einem Durchgang (4) oder einer Aussparung einer benachbarten Lage (2a, 2b, 2c) des gleichen Stapels (2, 2', 2") fluchtet oder kongruent zu diesem bzw. zu dieser ausgebildet ist, wobei die Vorrichtung (6) ein Gehäuse (7) umfasst, welches das Element (1, 1', 1") in oder an sich aufnimmt oder zumindest teilweise umgibt, wobei das Gehäuse (7) Mittel aufweist, mit denen es an einer Rohrleitung, an einem Maschinenteil oder in einem Durchbruch einer Wand festlegbar ist, und wobei die Mittel einen Flansch (8) umfassen zur Anlage an eine Wand und zum Umgeben eines Durchbruchs der Wand oder eine Rohrschelle (9) umfassen zur festen Verbindung der Vorrichtung (6) mit einem sich durch einen Durchbruch einer Wand und den Durchgang (4) oder die Aussparung erstreckendes Rohr, **dadurch gekennzeichnet, dass** das Gehäuse (7) eine erste zumindest teilweise abgeschlossene Kammer (10) aufweist, in der der erste Stapel (2') zur Wärmeisolierung angeordnet ist, und dass außerhalb der Kammer (10) der zweite Stapel (2") zur Wärmeabführung vorgesehen ist.

2. Vorrichtung nach Anspruch 1, **dadurch gekennzeichnet, dass** der erste Stapel (2') aus ersten Lagen (2a, 2b, 2c) der Wärmeisolierung dient, und dass der zweite Stapel (2") mit dem ersten Stapel (2') mittelbar oder unmittelbar verbunden ist, wobei der zweite Stapel (2") aus zweiten Lagen (2a, 2b, 2c) der Wärmeabführung und Kühlung dient, wobei der zweite Stapel (2") den ersten Stapel (2') umgibt und/ oder wobei der erste Stapel (2') seitlich neben dem zweiten Stapel (2") angeordnet ist.

3. Vorrichtung nach Anspruch 1 oder 2, **dadurch gekennzeichnet, dass** eine erste Lage (2a, 2b) eines der Stapel (2) einen Schlitz (3a) aufweist, der zu einem Schlitz (3b) einer benachbarten Lage (2b, 2c) versetzt oder deckungsgleich angeordnet ist.

4. Vorrichtung nach einem der voranstehenden Ansprüche, **dadurch gekennzeichnet, dass** mindestens eine Lage (2a, 2b, 2c) eines der Stapel (2, 2', 2") eine Ausnehmung aufweist, die bei einer anderen Lage (2a, 2b, 2c) des gleichen Stapels (2, 2`, 2") nicht vorgesehen ist.

5. Vorrichtung nach einem der voranstehenden Ansprüche, **dadurch gekennzeichnet, dass** mindestens eine Lage (2a, 2b, 2c) eines der Stapel (2, 2', 2") eine andere Dimension, einen anderen Umfang und/ oder eine andere Umfangskontur als eine andere Lage (2a, 2b, 2c) des gleichen Stapels (2, 2', 2") aufweist.

6. Vorrichtung nach einem der voranstehenden Ansprüche, **dadurch gekennzeichnet, dass** alle Lagen (2a, 2b, 2c) eines der Stapel (2, 2', 2") aus einem Verbund gefertigt sind, wobei der Verbund ein Gewebe, Gestrick oder Gewirke mit einer einseitigen oder beidseitigen Beschichtung umfasst.

7. Vorrichtung nach Anspruch 6, **dadurch gekennzeichnet, dass** das Gewebe, Gestrick oder Gewirke ein hochtemperaturbeständiges Isoliergewebe ist, welches mit einer wärmeleitenden Beschichtung oder einem Metall als wärmeleitender Beschichtung versehen ist.

8. Vorrichtung nach einem der voranstehenden Ansprüche, **dadurch gekennzeichnet, dass** alle Lagen (2a, 2b, 2c) eines der Stapel (2, 2', 2") miteinander fest verbunden sind oder dass alle Lagen (2a, 2b, 2c) eines der Stapel (2, 2', 2") ohne Verwendung eines Klebstoffs miteinander verliersicher verbunden sind.

9. Vorrichtung nach einem der voranstehenden Ansprüche, **dadurch gekennzeichnet, dass** die Lagen (2a, 2b, 2c) eines der Stapel (2, 2', 2") aufeinander folgende Dichtlippen (5a, 5b) ausbilden.

10. Vorrichtung nach einem der voranstehenden Ansprüche, **dadurch gekennzeichnet, dass** mindestens einer der Stapel (2, 2', 2") aus einer Vielzahl von gefalteten, an einander liegenden Lagen (2a, 2b, 2c) gefertigt ist, wobei je zwei Lagen (2a, 2b) an einer Scharnier- und Knick- oder Faltstelle (11) zusammenhängend miteinander verbunden sind.

## Claims

1. Apparatus (6) for arranging on a machine component or in an aperture of a wall, comprising an element (1, 1', 1") for thermal insulation in the high temperature range from 100°C to 1200°C and/or for heat dissipation and cooling in the high temperature range from 100°C to 1200°C, wherein the element (1, 1', 1'') has a first stack (2') and a second stack (2''), wherein each stack (2, 2', 2'') is configured in a flexible manner and from a large number of several adjoining layers (2a, 2b, 2c) of the same thickness, wherein each layer (2a, 2b, 2c) of the stack (2, 2', 2") is produced from the same material or the same materials as the other layers (2a, 2b, 2c) of the stack (2, 2', 2''), wherein each layer (2a, 2b, 2c) has a metal and/or a woven fabric, knitted fabric or hosiery which is resistant to high temperatures, wherein each layer (2a, 2b, 2c) has a passage (4) or a recess, which is at least partially or completely in alignment with a passage (4) or recess of an adjacent layer (2a, 2b, 2c) of the same stack (2, 2', 2") or is configured to be congruent therewith, wherein the apparatus (6) comprises a housing (7) which receives therein or at least partially surrounds the element (1, 1', 1"), wherein the housing (7) has means with which it can be secured to a pipeline, on a machine component or in an aperture of a wall, and wherein the means comprise a flange (8) for abutment against a wall and for surrounding an aperture of the wall or a pipe clamp (9) for secure connection of the apparatus (6) to a pipe which extends through an aperture of a wall and the passage (4) or the recess, **characterized in that** the housing (7) has a first at least partially closed chamber (10), in which the first stack (2') for thermal insulation is arranged and **in that** outside the chamber (10) the second stack (2") for heat dissipation is provided.

2. Apparatus according to claim 1, **characterized in that** the first stack (2') of first layers (2a, 2b, 2c) is used for thermal insulation and **in that** the second stack (2") is indirectly or directly connected to the first stack (2'), wherein the second stack (2") of second layers (2a, 2b, 2c) is used for heat dissipation and cooling, wherein the second stack (2") surrounds the first stack (2') and/or wherein the first stack (2') is arranged laterally beside the second stack (2").

3. Apparatus according to claim 1 or 2, **characterized in that** a first layer (2a, 2b) of one of the stacks (2) has a slot (3a) which is arranged offset or in a congruent manner with respect to a slot (3b) of an adjacent layer (2b, 2c).

4. Apparatus according to any one of the preceding claims, **characterized in that** at least one layer (2a, 2b, 2c) of one of the stacks (2, 2', 2'') has a recess which is not provided in another layer (2a, 2b, 2c) of the same stack (2, 2', 2'').

5. Apparatus according to any one of the preceding claims, **characterized in that** at least one layer (2a, 2b, 2c) of one of the stacks (2, 2', 2'') has a different dimension, a different circumference and/or a different circumferential contour from another layer (2a, 2b, 2c) of the same stack (2, 2', 2").

6. Apparatus according to any one of the preceding claims, **characterized in that** all the layers (2a, 2b, 2c) of one of the stacks (2, 2', 2") is produced from a grouping, wherein the grouping comprises a woven fabric, knitted fabric or hosiery having a single-sided or double-sided coating.

7. Apparatus according to Claim 6, **characterized in that** the woven fabric, knitted fabric or hosiery is an insulating fabric which is resistant to high temperatures and which is provided with a thermally-conductive coating or a metal as a thermally conductive coating.

8. Apparatus according to any one of the preceding claims, **characterized in that** all the layers (2a, 2b, 2c) of one of the stacks (2, 2', 2") are securely connected to each other or **in that** all the layers (2a, 2b, 2c) of one of the stacks (2, 2', 2") are connected to each other in a non-releasable manner without using an adhesive.

9. Apparatus according to any one of the preceding claims, **characterized in that** the layers (2a, 2b, 2c) of one of the stacks (2, 2', 2") form successive sealing lips (5a, 5b).

10. Apparatus according to any one of the preceding claims, **characterized in that** at least one of the stacks (2, 2', 2") is produced from a large number of folded layers (2a, 2b, 2c) which bear on each other, wherein two layers (2a, 2b) are connected to each other in a coherent manner at a hinging and bending or folding location (11).

## Revendications

1. Dispositif (6) destiné à être disposé sur une pièce de machine ou dans un passage d'une paroi, ledit dispositif comprenant un élément (1, 1', 1'') d'isolation thermique dans la gamme de hautes températures allant de 100 °C à 1200 °C et/ou de dissipation thermique et de refroidissement dans la gamme de températures élevées allant de 100 °C à 1200 °C, l'élément (1, 1', 1") comportant un premier empilement (2') et une deuxième empilement (2"), chaque empilement (2, 2', 2'') étant flexible et étant formé à partir d'un grand nombre de couches (2a, 2b, 2c) adjacentes les unes aux autres et d'égale épaisseur, chaque couche (2a, 2b, 2c) de l'empilement (2, 2', 2'') étant réaisée à partir du même matériau ou des mêmes matériaux que les autres couches (2a, 2b, 2c) de l'empilement (2, 2', 2''), chaque couche (2a, 2b, 2c) comportant un métal et/ou un tissu, un tricot ou un maillage résistants aux hautes températures, chaque couche (2a, 2b, 2c) comportant un passage (4) ou un évidement qui est au moins partiellement ou complètement formé avec un passage (4) ou un évidement d'une couche adjacente (2a, 2b, 2c) du même empilement (2, 2', 2'') en alignement ou de manière congruente avec ledit passage ou évidement, le dispositif (6) comprenant un boîtier (7) qui reçoit l'élément (1, 1', 1") dans ou sur lui-même ou l'entoure au moins partiellement, le boîtier (7) comportant des moyens permettant de le fixer à une conduite tubulaire, à une pièce de machine ou dans un passage d'une paroi, et les moyens comprenant une bride (8) destinée à venir en appui sur une paroi et à entourer un passage de la paroi ou comprenant un collier de serrage (9) destiné à relier de manière fixe le dispositif (6) à un tube qui s'étend à travers un passage d'une paroi et le passage (4) ou l'évidement,
**caractérisé en ce que** le boîtier (7) comporte une première chambre (10) qui est au moins partiellement fermée et dans laquelle est disposé le premier empilement (2') d'isolation thermique, et **en ce que** le deuxième empilement (2") de dissipation thermique est prévue à l'extérieur de la chambre (10).

2. Dispositif selon la revendication 1, **caractérisé en ce que** le premier empilement (2') de premières couches (2a, 2b, 2c) sert à l'isolation thermique, et **en ce que** le deuxième empilement (2'') est relié directement ou indirectement au premier empilement (2'), le deuxième empilement (2'') de deuxièmes couches (2a, 2b, 2c) servant à la dissipation thermique et au refroidissement, le deuxième empilement (2") entourant le premier empilement (2') et/ou le premier empilement (2') étant disposé latéralement à côté du deuxième empilement (2").

3. Dispositif selon la revendication 1 ou 2, **caractérisé en ce qu'**une première couche (2a, 2b) d'un des empilements (2) comporte une fente (3a) qui est décalée par rapport à une fente (3b) d'une couche adjacente (2b, 2c) ou est disposé de manière congruente.

4. Dispositif selon l'une des revendications précédentes, **caractérisé en ce qu'**au moins une couche (2a, 2b, 2c) d'un des empilements (2, 2', 2'') comporte un évidement qui n'est pas prévu dans une autre couche (2a, 2b, 2c) du même empilement (2, 2', 2'').

5. Dispositif selon l'une des revendications précédentes, **caractérisé en ce qu'**au moins une couche (2a, 2b, 2c) de l'un des empilements (2, 2', 2'') présente une dimension différente, une circonférence différente et/ou un contour circonférentiel différent de ceux d'une autre couche (2a, 2b, 2c) du même empilement (2, 2', 2").

6. Dispositif selon l'une des revendications précédentes, **caractérisé en ce que** toutes les couches (2a, 2b, 2c) d'un des empilements (2, 2', 2'') sont réalisées à partir d'un composite, le composite comprenant un tissu, un tricot ou un maillage pourvus d'un revêtement unilatéral ou bilatéral.

7. Dispositif selon la revendication 6, **caractérisé en ce que** le tissu, le tricot ou le maillage est un tissu isolant résistant à des hautes températures qui est pourvu d'un revêtement thermoconducteur ou d'un métal comme revêtement thermoconducteur.

8. Dispositif selon l'une des revendications précédentes, **caractérisé en ce que** toutes les couches (2a, 2b, 2c) d'un des empilements (2, 2', 2'') sont reliés de manière fixe les unes aux autres ou **en ce que** toutes les couches (2a, 2b, 2c) de l'un des empilements (2, 2', 2'') sont reliées les unes aux autres de manière captive sans utilisation d'adhésif.

9. Dispositif selon l'une des revendications précédentes, **caractérisé en ce que** les couches (2a, 2b, 2c) d'un des empilements (2, 2', 2") forment des lèvres d'étanchéité successives (5a, 5b).

10. Dispositif selon l'une des revendications précédentes, **caractérisé en ce qu'**au moins un des empilements (2, 2', 2'') est réalisé à partir d'un grand nombre de couches imbriquées pliées (2a, 2b, 2c), deux couches (2a, 2b) étant reliées l'une à l'autre de manière continue au niveau d'un point charnière et de courbure ou de pliage (11).
